# EUROPEAN PATENT APPLICATION

(11) **EP 4 683 401 A1**
(43) Date of publication of application: **21.01.2026**
(21) Application number: 24727131.5
(22) Date of filing: 11.03.2024
(51) Int. Cl.: H04W 56/00, H04W 72/04, H04W 72/0457, H04W 52/36, H04W 52/38, H04W 74/08, H04W 24/08, H04B 17/318, H04W 92/18

(54) **METHOD AND DEVICE FOR TRANSMITTING AND RECEIVING SYNCHRONIZATION SIGNAL IN UNLICENSED BAND**

(30) Priority: 14.03.2023 KR 20230033413; 26.04.2023 KR 20230054671; 04.05.2023 KR 20230058532; 22.05.2023 US 202363468232 P
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Maikowski & Ninnemann Patentanwälte Partnerschaft mbB
(86) International application number: PCT/KR2024/003078
(87) International publication number: WO 2024/191144

(57) **Abstract**

Provided are a method for performing wireless communication by a first device and an apparatus supporting same. The first device may obtain information related to a first resource block (RB) set; obtain first number information related to a number of repeated sidelink-synchronization signal/physical sidelink broadcast channel (S-SS/PSBCH) blocks in a frequency domain within the first RB set; obtain first gap information related to a gap between the repeated S-SS/PSBCH blocks in the frequency domain within the first RB set; and transmit at least one S-SS/PSBCH block within the first RB set, based on the first number information related to the number of repeated S-SS/PSBCH blocks and the first gap information related to the gap between the repeated S-SS/PSBCH blocks.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, highfrequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

Based on an embodiment of the present disclosure, a method for performing wireless communication by a first device may be provided. For example, the method may comprise: obtaining information related to a first resource block (RB) set; obtaining first number information related to a number of repeated sidelink-synchronization signal/physical sidelink broadcast channel (S-SS/PSBCH) blocks in a frequency domain within the first RB set; obtaining first gap information related to a gap between the repeated S-SS/PSBCH blocks in the frequency domain within the first RB set; and transmitting at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: obtaining information related to a first resource block (RB) set; obtaining first number information related to a number of repeated sidelink-synchronization signal/physical sidelink broadcast channel (S-SS/PSBCH) blocks in a frequency domain within the first RB set; obtaining first gap information related to a gap between the repeated S-SS/PSBCH blocks in the frequency domain within the first RB set; and transmitting at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: obtaining information related to a first resource block (RB) set; obtaining first number information related to a number of repeated sidelink-synchronization signal/physical sidelink broadcast channel (S-SS/PSBCH) blocks in a frequency domain within the first RB set; obtaining first gap information related to a gap between the repeated S-SS/PSBCH blocks in the frequency domain within the first RB set; and transmitting at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Based on an embodiment of the present disclosure, a non-transitory computer-readable storage medium storing instructions may be provided. For example, the instructions, when executed, may cause a first device to perform operations comprising: obtaining information related to a first resource block (RB) set; obtaining first number information related to a number of repeated sidelink-synchronization signal/physical sidelink broadcast channel (S-SS/PSBCH) blocks in a frequency domain within the first RB set; obtaining first gap information related to a gap between the repeated S-SS/PSBCH blocks in the frequency domain within the first RB set; and transmitting at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a synchronization source or a synchronization reference, based on an embodiment of the present disclosure.
FIG. 10 shows an interlaced RB, based on an embodiment of the present disclosure.
FIG. 11 shows an example in which an S-SSB frequency location indicator is (pre-)configured for each RB set, based on an embodiment of the present disclosure.
FIG. 12 shows an example of S-SSB transmission based on parameters for a structure of S-SSB configured for each RB set, based on an embodiment of the present disclosure.
FIG. 13 shows a method for a first device to perform wireless communication, based on an embodiment of the present disclosure.
FIG. 14 shows a method for a second device to perform wireless communication, based on an embodiment of the present disclosure.
FIG. 15 shows a communication system 1, based on an embodiment of the present disclosure.
FIG. 16 shows wireless devices, based on an embodiment of the present disclosure.
FIG. 17 shows a signal process circuit for a transmission signal, based on an embodiment of the present disclosure.
FIG. 18 shows another example of a wireless device, based on an embodiment of the present disclosure.
FIG. 19 shows a hand-held device, based on an embodiment of the present disclosure.
FIG. 20 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

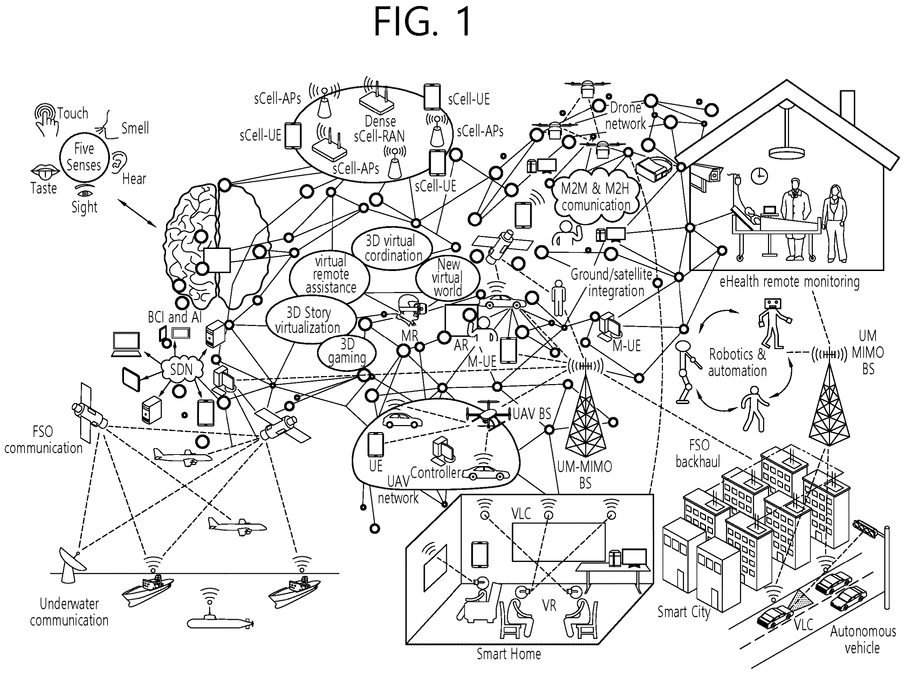

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

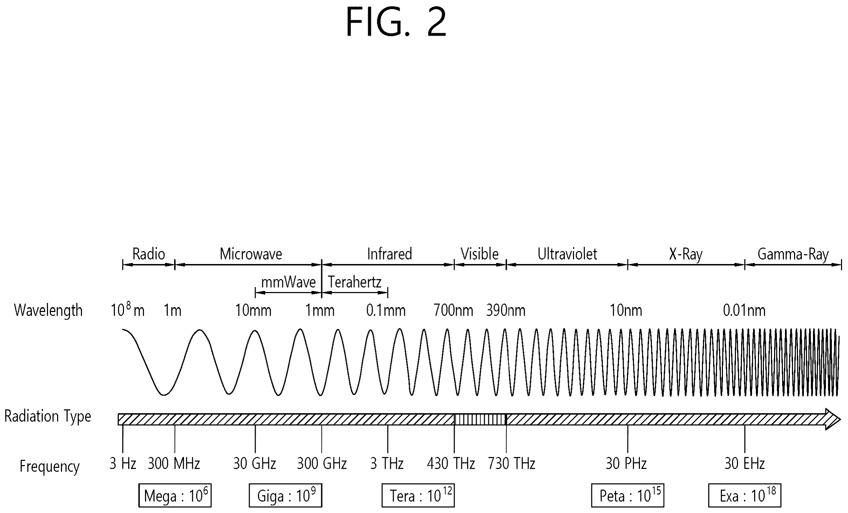

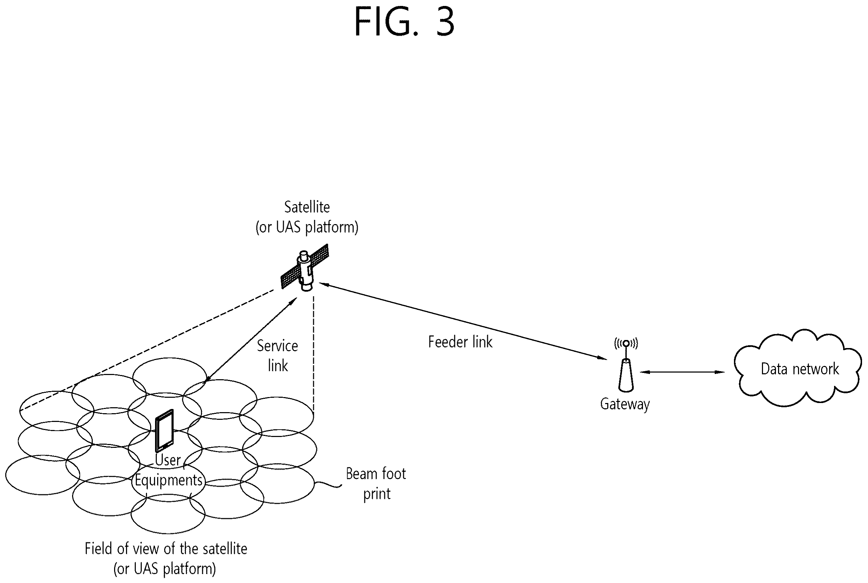

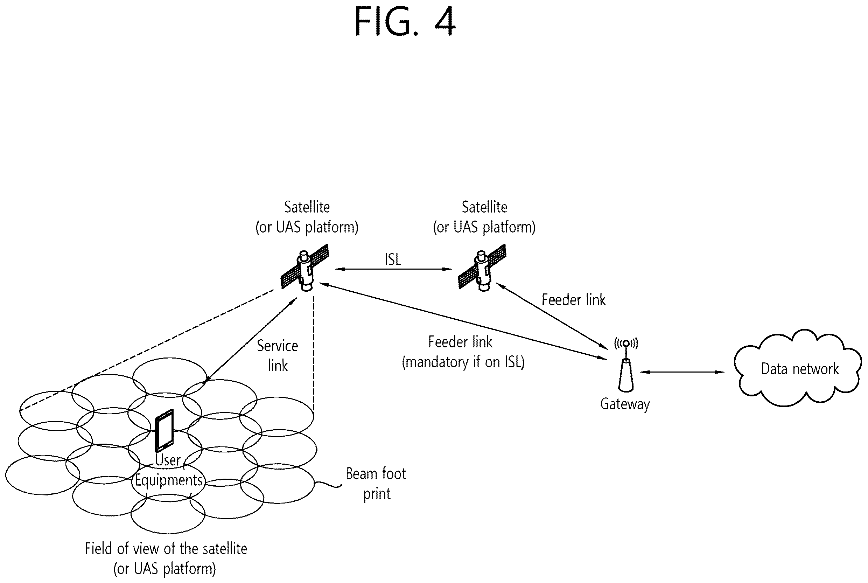

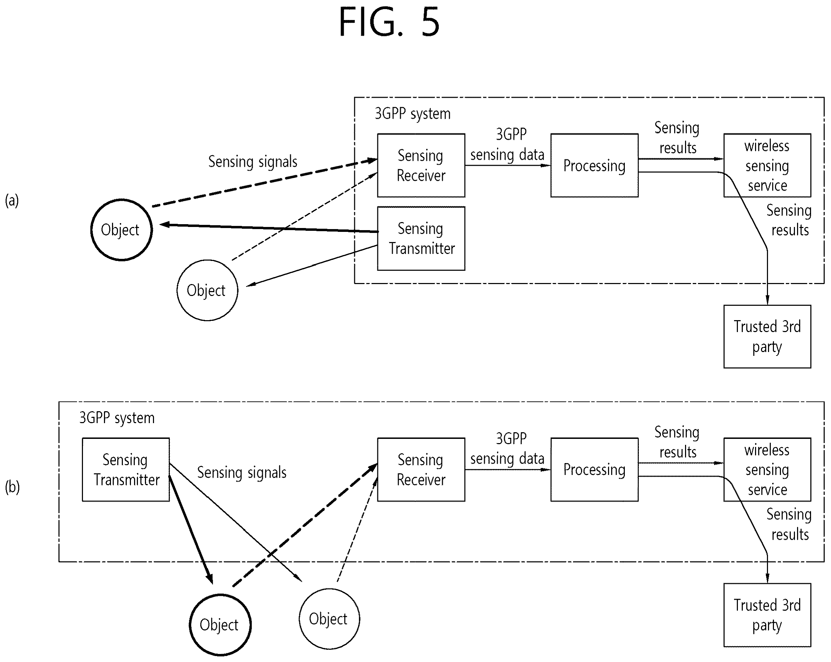

Core implementation technology of 6G system is described below.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

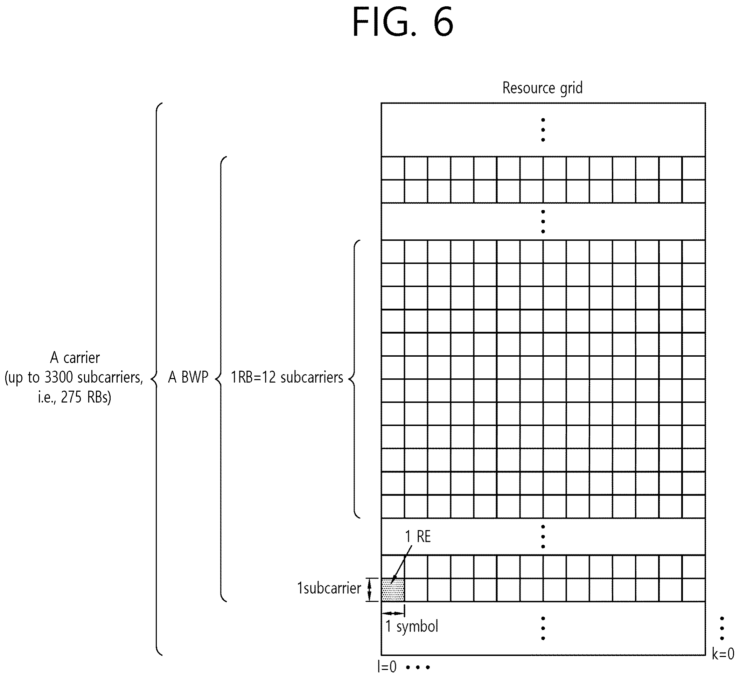

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

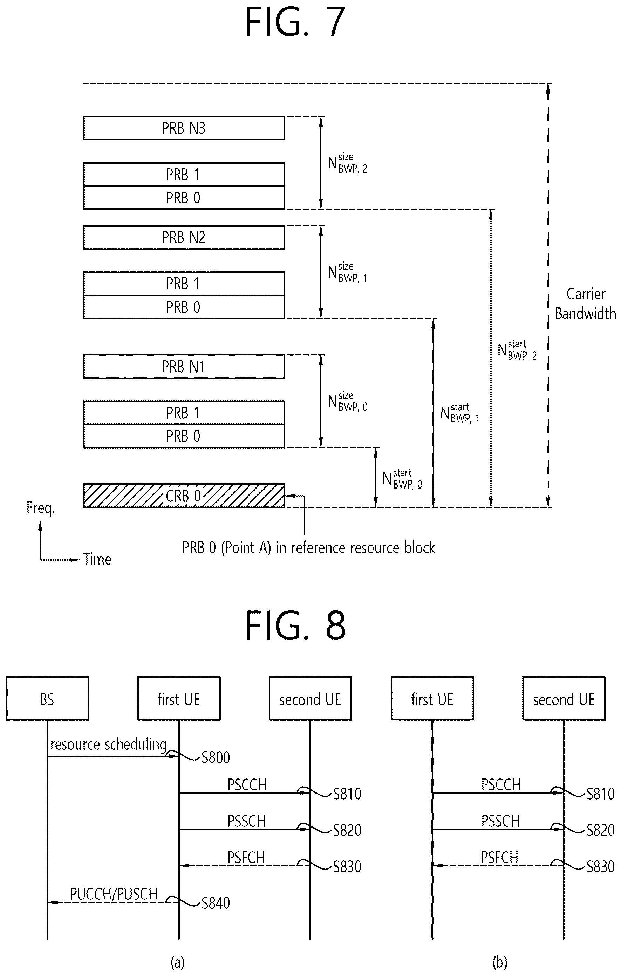

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

For example, the UE may generate an S-SS/PSBCH block (i.e., S-SSB), and the UE may map and transmit the S-SS/PSBCH block (i.e., S-SSB) on physical resources. For example, the time-frequency structure of the S-SS/PSBCH block may be as follows.

In the time domain, the S-SS/PSBCH block may consist of N^{S-SSB}_{symb} OFDM symbols, numbered in increasing order from 0 to N^{S-SSB}_{symb} - 1 within the S-SS/PSBCH block, where S-PSS, S-SSS, and PSBCH with associated DM-RS are mapped to symbols as given by Table 3. The number of OFDM symbols in the S-SS/PSBCH block N^{S-SSB}_{symb} = 13 for normal cyclic prefix and N^{S-SSB}_{symb} = 11 for extended cyclic prefix. The first OFDM symbol in the S-SS/PSBCH block may be the first OFDM symbol in the slot.

In the frequency domain, the S-SS/PSBCH block may consist of 132 contiguous subcarriers with the subcarriers numbered in increasing order from 0 to 131 within the sidelink S-SS/PSBCH block. The quantities k and l may represent the frequency and time indices, respectively, within one sidelink S-SS/PSBCH block.

**[Table 3]**

| Channel or signal | OFDM symbol number 1 relative to the start of an S-SS/PSBCH block | Subcarrier number k relative to the start of an S-SS/PSBCH block |
|---|---|---|
| S-PSS | 1, 2 | 2, 3, ..., 127, 128 |
| S-SSS | 3, 4 | 2, 3, ..., 127, 128 |
| Set to zero | 1, 2, 3, 4 | 0, 1, 129, 130, 131 |
| PSBCH | 0, 5, 6, ..., N^{S-SSB}_{symb}-1 | 0, 1, ..., 131 |
| DM-RS for PSBCH | 0, 5, 6, ..., N^{S-SSB}_{symb}-1 | 0, 4, 8, ..., 128 |

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

For example, the 1^{st}-stage SCI format may include a SCI format 1-A and/or a SCI format 1-B, and the 2^{nd}-stage SCI format may include a SCI format 2-A, a SCI format 2-B, a SCI format 2-C and/or a SCI format 2-D.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log2(N^{SL}_{subChannel}(N^{SL}_{subChannel+1})(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits
- Beta_offset indicator - 2 bits as provided by higher layer parameter sl-BetaOffsets2ndSCI
- Number of DMRS port - 1 bit
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 4
- CSI request - 1 bit

**[Table 4]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR- Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a hybrid automatic repeat request (HARQ) procedure will be described.

For example, the SL HARQ feedback may be enabled for unicast. For example, the SL HARQ feedback may be enabled for groupcast. For example, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit negative acknowledgement (NACK) to the transmitting UE through a PSFCH. Otherwise, if the receiving UE decodes the PSCCH of which the target is the receiving UE and if the receiving UE successfully decodes the transport block related to the PSCCH, the receiving UE may not transmit positive acknowledgement (ACK) to the transmitting UE.
(2) Groupcast option 2: After the receiving UE decodes the PSCCH of which the target is the receiving UE, if the receiving UE fails in decoding of the transport block related to the PSCCH, the receiving UE may transmit NACK to the transmitting UE through the PSFCH. In addition, if the receiving UE decodes the PSCCH of which the target is the receiving UE and if the receiving UE successfully decodes the transport block related to the PSCCH, the receiving UE may transmit ACK to the transmitting UE through the PSFCH.

Hereinafter, synchronization acquisition of a UE will be described.

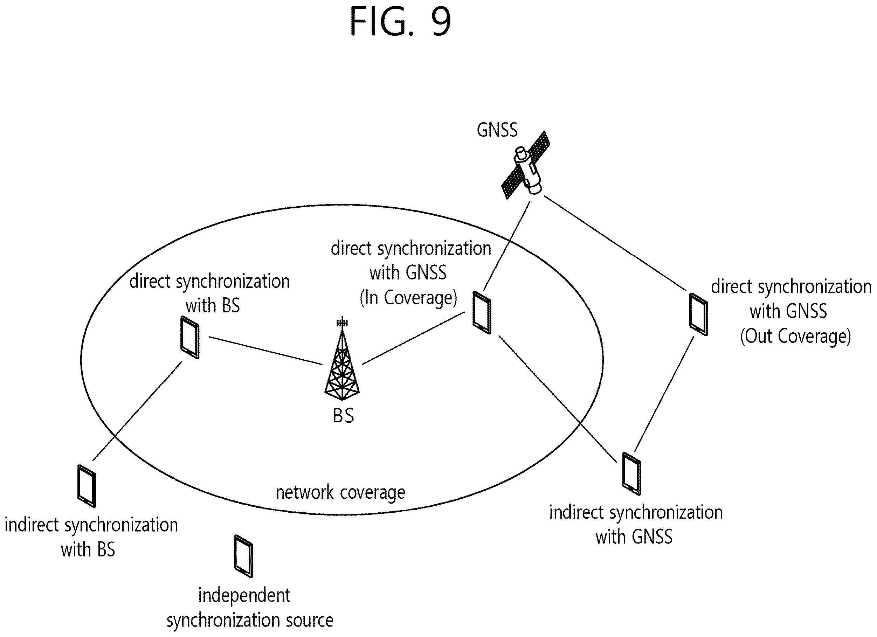

FIG. 9 shows a synchronization source or a synchronization reference, based on an embodiment of the present disclosure. The embodiment of FIG. 9 may be combined with various embodiments of the present disclosure.

Referring to FIG. 9, in V2X, a UE may be directly synchronized with a global navigation satellite system (GNSS), or may be indirectly synchronized with the GNSS through a UE (inside network coverage or outside network coverage) directly synchronized with the GNSS. If the GNSS is configured as the synchronization source, the UE may calculate a DFN and a subframe number by using a coordinated universal time (UTC) and a (pre-)configured direct frame number (DFN) offset.

Alternatively, the UE may be directly synchronized with a BS, or may be synchronized with another UE which is time/frequency-synchronized with the BS. For example, the BS may be an eNB or a gNB. For example, if the UE is inside the network coverage, the UE may receive synchronization information provided by the BS, and may be directly synchronized with the BS. Thereafter, the UE may provide the synchronization information to adjacent another UE. If BS timing is configured based on synchronization, for synchronization and downlink measurement, the UE may be dependent on a cell related to a corresponding frequency (when it is inside the cell coverage at the frequency), or a primary cell or a serving cell (when it is outside the cell coverage at the frequency).

The BS (e.g., serving cell) may provide a synchronization configuration for a carrier used in V2X or SL communication. In this case, the UE may conform to the synchronization configuration received from the BS. If the UE fails to detect any cell in a carrier used in the V2X or SL communication and fails to receive the synchronization configuration from the serving cell, the UE may conform to a pre-configured synchronization configuration.

Alternatively, the UE may be synchronized with another UE which fails to obtain synchronization information directly or indirectly from the BS or the GNSS. A synchronization source or preference may be pre-configured to the UE. Alternatively, the synchronization source and preference may be configured through a control message provided by the BS.

A SL synchronization source may be associated/related with a synchronization priority. For example, a relation between the synchronization source and the synchronization priority may be defined as shown in Table 5 or Table 6. Table 5 or Table 6 are for exemplary purposes only, and the relation between the synchronization source and the synchronization priority may be defined in various forms.

**[Table 5]**

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

**[Table 6]**

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | BS | GNSS |
| P4 | All UEs directly synchronized with BS | All UEs directly synchronized with GNSS |
| P5 | All UEs indirectly synchronized with BS | All UEs indirectly synchronized with GNSS |
| P6 | Remaining UE(s) having low priority | Remaining UE(s) having low priority |

In Table 5 or Table 6, P0 may denote a highest priority, and P6 may denote a lowest priority. In Table 5 or Table 6, the BS may include at least one of a gNB and an eNB.

Whether to use GNSS-based synchronization or BS-based synchronization may be (pre-)configured. In a single-carrier operation, the UE may derive transmission timing of the UE from an available synchronization reference having the highest priority.

For example, the UE may (re)select a synchronization reference, and the UE may obtain synchronization from the synchronization reference. In addition, the UE may perform SL communication (e.g., PSCCH/PSSCH transmission/reception, physical sidelink feedback channel (PSFCH) transmission/reception, S-SSB transmission/reception, reference signal transmission/reception, etc.) based on the obtained synchronization.

Meanwhile, a set of (equally spaced) non-contiguous RBs on a frequency may be allocated to a UE. This set of non-contiguous RBs may be referred to as interlaced RBs. This may be useful in spectrum (e.g., shared spectrum) that is subject to regulations such as occupied channel bandwidth (OCB), power spectral density (PSD), etc.

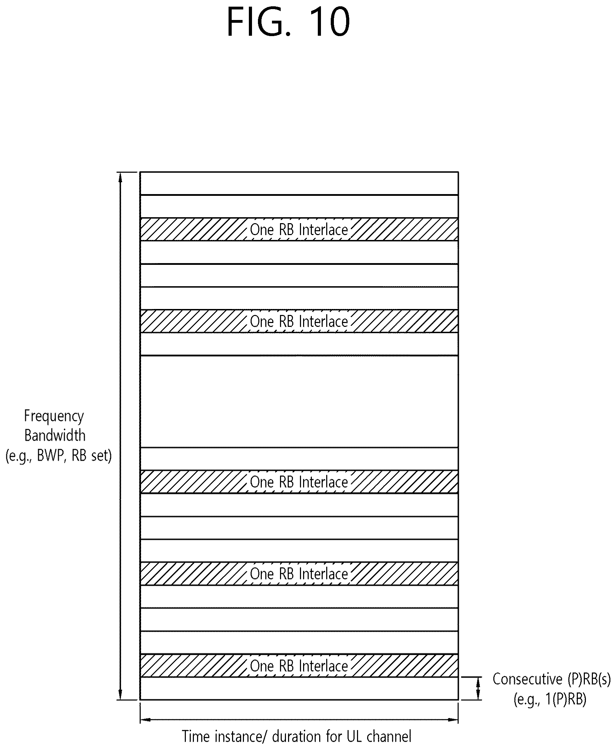

FIG. 10 shows an interlaced RB, based on an embodiment of the present disclosure. The embodiment of FIG. 10 may be combined with various embodiments of the present disclosure.

Referring to FIG. 10, interlaces of RBs may be defined in a frequency domain. An interlace m∈ {0, 1, ..., M-1} may comprise (common) RBs {m, M+m, 2M+m, 3M+m, ...}, where M may represent the number of interlaced RBs given by Table 7.

**[Table 7]**

| u | M |
|---|---|
| 0 | 10 |
| 1 | 5 |

A communication device (e.g., a device, a UE, a vehicle, a drone, etc. proposed in various embodiments of the present disclosure) may transmit a signal/channel by using one or more interlaced RBs.

Meanwhile, in the next-generation system, the UE may perform a sidelink transmission operation and/or a sidelink reception operation in an unlicensed band. Meanwhile, for the operation in the unlicensed band, a channel sensing operation (e.g., energy detection/measurement) for a channel to be used may be performed before the UE performs transmission, depending on band-specific regulations or requirements. Only if the channel or the set of RBs to be used is determined to be IDLE as a result of the channel sensing (e.g., if the measured energy is less than or equal to a specific threshold), the UE may perform transmission in the unlicensed band. If the channel or the RB set to be used is determined to be BUSY as a result of the channel sensing (e.g., if the measured energy is greater than or equal to a specific threshold), the UE may cancel all or part of transmission in the unlicensed band. Meanwhile, in the operation in the unlicensed band, the UE may skip or simplify the channel sensing operation (make a channel sensing interval relatively small) within a certain time after transmission within a specific time duration. On the other hand, after the certain time has passed after the transmission, the UE may determine whether to transmit after performing the usual channel sensing operation. Meanwhile, for transmission in the unlicensed band, power spectral density (PSD) and/or a size of frequency occupation domain and/or a time interval of a signal/channel transmitted by the UE may be greater than or equal to a certain level, respectively, depending on regulations or requirements. Meanwhile, in the unlicensed band, in order to simplify channel sensing, it may be informed through channel occupancy time (COT) duration information that a channel obtained based on initial general channel sensing is occupied for a certain time, and the maximum length of the COT duration may be configured differently depending on a channel access priority class (CAPC) or a priority value of a data packet or a service.

Meanwhile, according to the specification in the unlicensed band, sidelink transmission may be transmitted over multiple spaced apart RBs. Meanwhile, for uplink channel transmission in the unlicensed band, the UE may be provided by the base station with a single or multiple RB set(s) and a single or multiple interlaces, and the final transmission resource may be determined as the intersection of RBs corresponding to the provided interlace(s) and RBs within the provided RB set(s). Meanwhile, the interlace may be defined in a common RB (CRB) grid. In the CRB grid, for a set of RBs spaced 10 RBs apart in the case of 15 kHz and a set of RBs spaced 5 RBs apart in the case of 30 kHz, an interlace index of each interlace may be determined based on an RB offset with respect to CRB #0. Meanwhile, in the case of sidelink communication, sensing and/or resource (re)selection may be performed on a subchannel basis, and it may therefore be desired to represent a subchannel in the form of an RB set and/or an interlace. An advantage of this is that the subchannel-based sensing operation and/or resource scheduling method can be reused as much as possible.

Meanwhile, the number of PRBs configured for each RB set may be different. Therefore, it may be difficult to satisfy OCB requirements in a specific RB set based on a single SSB repetition configuration information. Furthermore, if the number of RB sets for S-SSB repeat transmissions is variable, and the power of S-SSB is variable, the synchronization source may be unnecessarily reselected or the synchronization source may be selected incorrectly in operation using S-SSB-based measurement values.

Meanwhile, sidelink transmission in the unlicensed band may be transmitted in whole or in part in the interlaced structure, transmitted through a plurality of spaced RB groups, or transmitted repeatedly (in the frequency domain).

Meanwhile, S-SSB, consisting of 11 RBs, may be repeated in the frequency domain in order to satisfy occupied channel bandwidth (OCB) requirements.

Meanwhile, OCB requirements may be temporarily omitted within a channel occupancy time (COT) duration, and in this case, the UE may map part of S-SSB (e.g., S-PSS and/or S-SSS and/or the remaining PSBCH after S-PSS and S-SSS) to 11 PRBs, and mapping for the interlaced structure and/or the frequency-domain repeated structure and/or spaced PRB groups may be performed for part of S-SSB (e.g. PSBCH before S-PSS and SSS and/or all or part of PSBCH). Meanwhile, OCB requirements are temporarily omitted as described above, a form in which part of S-SSB is repeated on the frequency domain in excess of 11 PRBs or a form in which PSBCH surrounds S-PSS and/or S-SSS may be supported in order to still have a bandwidth of 2 MHz or more.

Meanwhile, S-SSB transmission may be located in the middle of a COT duration or in the middle of multi-consecutive slot transmission (MCSt) of the UE, and in this case, for the purpose of maintaining COT or maintaining MCSt, the UE may transmit S-SSB for a single or multiple RB set(s) in S-SSB occasions. In order to implement the above process, the S-SSB resource itself may need to be pre-defined or configured for multiple RB set(s) in advance.

For example, sl-AbsoluteFrequencySSB may indicate a frequency location of S-SSB, and a transmission bandwidth (BW) of S-SSB may be limited to be located within a BW of a SL BWP and/or within a BW of a specific RB set.

For example, the UE may be (pre-)configured with one or more S-SSB frequency location indicators, and/or each S-SSB frequency location indicator may be configured to include each S-SSB bandwidth in a different RB set.

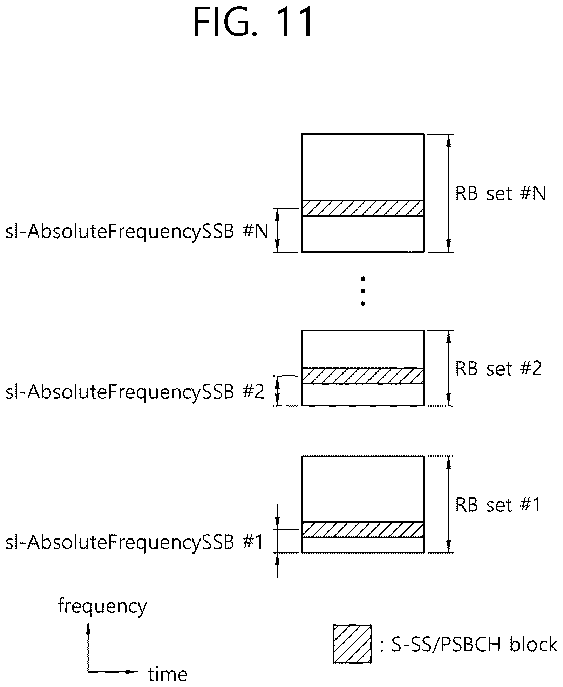

FIG. 11 shows an example in which an S-SSB frequency location indicator is (pre-)configured for each RB set, based on an embodiment of the present disclosure. The embodiment of FIG. 11 may be combined with various embodiments of the present disclosure.

Referring to FIG. 11, the UE may be (pre-)configured with one or more S-SSB frequency location indicators. For example, sl-AbsoluteFrequencySSB #1 may be configured for RB set #1, and sl-AbsoluteFrequencySSB #2 may be configured for RB set #2, and sl-AbsoluteFrequencySSB #N may be configured for RB set #N. Herein, N may be a positive integer. In the embodiment of FIG. 11, sl-AbsoluteFrequencySSB #1 may be a frequency location of the lowest S-SS/PSBCH block within RB set #1, and sl-AbsoluteFrequencySSB #2 may be a frequency location of the lowest S-SS/PSBCH block within RB set #2, and sl-AbsoluteFrequencySSB #N may be a frequency location of the lowest S-SS/PSBCH block within RB set #N. For example, each S-SSB frequency location indicator may be configured to include each S-SSB BW in a different RB set.

For example, the UE may be (pre-)configured with information related to the number of RB sets for S-SSB transmission, and in this case, starting with an RB set associated with sl-AbsoluteFrequencySSB, S-SSB frequency resources may be allocated to consecutive RB sets as many as the number of RB sets. For example, for an RB location and a subcarrier location within each RB set, subcarrier offset value(s) and/or the lowest PRB of the RB set for S-SSB frequency resources within the RB set associated with sl-AbsoluteFrequencySSB may be commonly applied.

For example, information related to the combination and number of RB sets allocated for S-SSB may be different for each of S-SSB occasions and/or for each of S-SSB occasions and additional S-SSB occasions.

For example, parameters for the structure of S-SSB (e.g., the number of S-SSB frequency repetitions and/or a gap between S-SSB frequency repetitions and/or allocated interlaces, etc.) may be different and/or independently (pre-)configured for each RB set. For example, in the embodiment of FIG. 11, parameters for the structure of S-SSB for RB set #1 (e.g., the number of S-SSB frequency repetitions and/or a gap between S-SSB frequency repetitions and/or allocated interlaces, etc.), parameters for the structure of S-SSB for RB set #2 (e.g., the number of S-SSB frequency repetitions and/or a gap between S-SSB frequency repetitions and/or allocated interlaces, etc.), and parameters for the structure of S-SSB for RB set #N (e.g., the number of S-SSB frequency repetitions and/or a gap between S-SSB frequency repetitions and/or allocated interlaces, etc.) may be (pre-)configured independently.

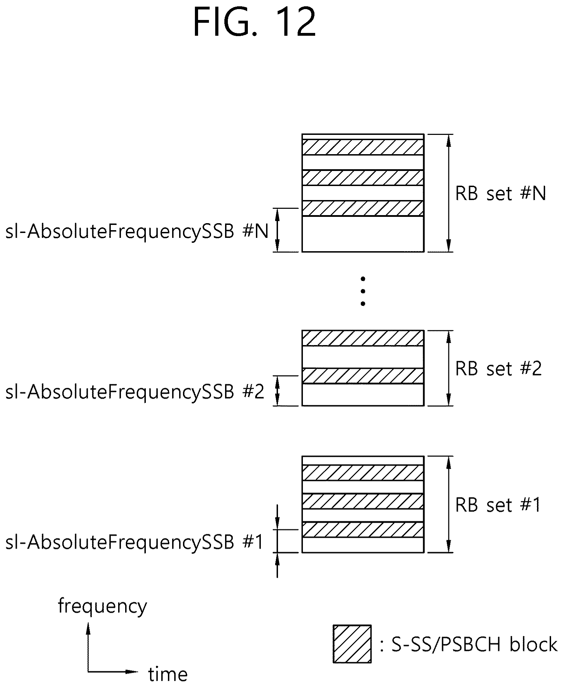

FIG. 12 shows an example of S-SSB transmission based on parameters for a structure of S-SSB configured for each RB set, based on an embodiment of the present disclosure. The embodiment of FIG. 12 may be combined with various embodiments of the present disclosure.

Referring to FIG. 12, parameters for the structure of S-SSB for RB set #1 (e.g., the number of S-SSB frequency repetitions=3 and a gap between S-SSB frequency repetitions=gap #1), parameters for the structure of S-SSB for RB set #2 (e.g., the number of S-SSB frequency repetitions=2 and a gap between S-SSB frequency repetitions=gap #2), and parameters for the structure of S-SSB for RB set #N (e.g., the number of S-SSB frequency repetitions=3 and a gap between S-SSB frequency repetitions=gap #N) may be (pre-)configured independently. In this case, the UE may transmit or receive S-SSB based on the corresponding parameters within each RB set. For example, within RB set #1, the UE may transmit or receive three S-SSBs spaced by gap #1, with respect to sl-AbsoluteFrequencySSB #1. For example, within RB set #2, the UE may transmit or receive two S-SSBs spaced by gap #2, with respect to sl-AbsoluteFrequencySSB #2. For example, within RB set #N, the UE may transmit or receive three S-SSBs spaced by gap #N, with respect to sl-AbsoluteFrequencySSB #N.

For example, if parameters for the structure of S-SSB (e.g., the number of S-SSB frequency repetitions and/or a gap between S-SSB frequency repetitions and/or allocated interlaces, etc.) are commonly applied to RB set(s) in which S-SSB resources are allocated, a specific RB set or S-SSB repetitions and/or S-SSB resources outside frequency resources within an RB set may be excluded from S-SSB resource allocation within the RB set.

For example, an S-SSB receiving UE may not be required to attempt to detect S-SSB on additional S-SSB resources (in the frequency domain and/or in the time domain).

For example, the UE may not expect to receive multiple S-SSB transmissions for non-contiguous RB sets in the frequency domain. For example, the UE may simultaneously perform multiple S-SSB transmissions for contiguous RB sets in the frequency domain.

For example, even if the UE has successfully/performed transmission on a previous S-SSB (time and/or frequency) resource, if an (additional) S-SSB (time and/or frequency) resource is located inside a COT (in terms of time and/or frequency) initiated by the UE and/or in the middle of multi-consecutive slot transmission (MCSt) of the UE in time and is a super set in terms of frequency and/or overlaps in whole or in part and/or inside a shared COT (in terms of time and/or frequency) received or utilized by the UE, the UE may attempt to transmit S-SSB on the (additional) S-SSB (time and/or frequency) resource.

For example, the above determination of whether to attempt the S-SSB transmission based on the COT may be limited to a case where the S-SSB transmission satisfies a COT usage condition (e.g., limitation of a CAPC value and/or limitation of an energy detection threshold (EDT) or maximum transmit power).

For example, multiple S-SSB transmissions of the UE may be limited to a case where a sum of power values of S-SSB in an RB set or power values of each S-SSB is greater than or equal to a certain level (e.g., a (pre-)configured value), and/or if a sum of power values of S-SSB in an RB set or power values of each S-SSB is less than or equal to a certain level, the UE may skip attempting to transmit S-SSB on the (additional) S-SSB (time and/or frequency) resource.

For example, the UE may perform S-SSB transmission on S-SSB resources for which the UE performs S-SSB reception on S-SSB resources within the COT. For example, the exception to the S-SSB reception operation may be when the UE has previously received S-SSB from another UE or the UE receives S-SSB from another UE within a certain time interval.

For example, if S-SSB (time and/or frequency) resources are larger than an RB set domain or a frequency domain for a COT, the UE may preferentially or limitedly perform transmission on S-SSB resources for all or part of RB sets associated with the COT (based on the above condition, etc.) and/or the UE may preferentially or limitedly perform transmission on S-SSB resources for all or part of RB sets or a frequency domain (for MCSt) occupied after S-SSB time resources of the UE.

For example, the UE's attempt to transmit S-SSB on the (additional) S-SSB (time and/or frequency) resource may be limited to a case where a guard band exists between RB sets.

For example, a presence or an absence of a nominal power configuration parameter and/or a nominal power configuration and/or a configuration of a scaling value or an alpha value for a pathloss term may be (pre-)configured differently and/or independently for each RB set and/or for each S-SSB (frequency and/or time) resource and/or for each S-SSB (frequency and/or time) resource and (frequency and/or time) additional resource.

For example, a presence or an absence of a nominal power configuration parameter and/or a nominal power configuration and/or a scaling value or an alpha value for a pathloss term for S-SSB may be applied equally and commonly for multiple RB sets allocated for S-SSB and/or for S-SSB (frequency and/or time) resource(s).

For example, the power may be allocated equally for S-SSB repetitions and/or multiple S-SSBs for multiple RB sets and/or within a single RB set transmitted by the UE. For example, the power may be allocated equally for S-SSB repetitions and/or multiple S-SSBs within a single RB set transmitted by the UE. For example, in the embodiment of FIG. 11 and/or FIG. 12, if multiple S-SSBs are transmitted within RB set #1, the power may be allocated equally for the multiple S-SSBs. For example, in the embodiment of FIG. 11 and/or FIG. 12, if multiple S-SSBs are transmitted within RB set #2, the power may be allocated equally for the multiple S-SSBs. For example, in the embodiment of FIG. 11 and/or FIG. 12, if multiple S-SSBs are transmitted within RB set #N, the power may be allocated equally for the multiple S-SSBs.

For example, if the sum of the power for the multiple S-SSB transmissions of the UE becomes greater than the maximum UE power, the UE may lower the respective power allocation for the multiple S-SSBs equally.

For example, if the sum of the power for the multiple S-SSB transmissions of the UE becomes greater than the maximum UE power, the UE may (equally or differentially) allocate S-SSB power for the additional S-SSB (time and/or frequency) resources after preferentially allocating S-SSB power for the default S-SSB (time and/or frequency) resource. For example, in the embodiment of FIG. 11 and/or FIG. 12, if the sum of the power for the multiple S-SSB transmissions of the UE becomes greater than the maximum UE power, the UE may (equally or differentially) allocate S-SSB power for the additional S-SSB (time and/or frequency) resources after preferentially allocating S-SSB power for the default S-SSB (time and/or frequency) resource. In the embodiment of FIG. 11 and/or FIG. 12, assuming that RB set #1 is an anchor RB set including the default S-SSB (time and/or frequency) resource, the UE may allocate power for transmission of each S-SS/PSBCH block within the anchor RB set, and then allocate the remaining power equally for transmission of each S-SS/PSBCH block within all non-anchor RB sets (e.g., RB set #2 to RB set #N).

For example, a minimum power value of each S-SSB for multiple S-SSB transmissions of the UE may be (pre-)configured and/or calculated or determined by the UE.

For example, if the sum of the power for the multiple S-SSB transmissions of the UE becomes greater than the maximum UE power, the UE may cancel all or part of the remaining S-SSB transmissions except for specific S-SSB transmission (for synchronization).

For example, the UE may perform multiple S-SSB transmissions such that the power for each of the S-SSB transmissions is not reduced by the upper limit. For example, each of the S-SSB transmissions may be in the form of a single or multiple S-SSB repeat bundles within an RB set, and/or the determination of whether to perform transmission for each S-SSB transmission (group) may be a unit of an RB set.

For example, if the UE uses an S-SSB structure based on OCB requirements and/or PSD requirements, and/or if OCB requirements and/or PSD requirements are defined/configured for a SL carrier, S-SSB transmission may be performed through multiple RB sets. For example, the PSD requirements may be further limited to be a specific value. For example, the specific value for the PSD requirements may be 10 dBm/MHz or less.

For example, the UE may use multiple S-SSB transmissions and/or S-SSB transmissions through multiple RB sets to be limited to additional S-SSB occasions.

For example, when the UE selects PSCCH/PSSCH transmission resource(s) before and/or after default and/or additional S-SSB resources, the UE may deprioritize the use of available resources within an RB set in which S-SSB resources do not exist.

For example, when the UE selects PSCCH/PSSCH transmission resource(s) before and/or after default and/or additional S-SSB resources, the UE may deprioritize the use of available resources outside contiguous RB sets in which S-SSB resources exist.

For example, when the UE selects PSCCH/PSSCH transmission resource(s) before and/or after default and/or additional S-SSB resources, the UE may prioritize the use of available resources within contiguous RB sets in which S-SSB resources exist and/or within a COT available for PSCCH/PSSCH transmission.

Meanwhile, the UE may (re)select the synchronization reference based on SSS and/or PSBCH-RSRP (hereinafter, S-SSB-RSRP), and the UE may determine whether to relay S-SSB received from another UE based on a value of S-SSB-RSRP.

For example, when calculating an L3-filtered value for the S-SSB-RSRP, slots in which multiple S-SSB (group) transmissions occurred may be excluded from the calculation. For example, when calculating an L3-filtered value for the S-SSB-RSRP, measurement values for multiple S-SSB (group) transmission(s) determined by the UE may be utilized for slots in which multiple S-SSB (group) transmissions occurred, and in this case, an average value and/or a maximum value and/or a minimum value and/or a measurement value for a specific S-SSB (group) (for synchronization) and/or a value obtained by multiplying the specific value by the number of S-SSB (group) transmissions determined by the UE or applying a scaling value corresponding thereto may be used.

For example, when calculating an L3-filtered value for the S-SSB-RSRP, measurement may be performed separately for slots in which multiple S-SSB (group) transmissions occurred and slots in which a single transmission occurred.

For example, an RSRP threshold for synchronization reference (re)selection and/or an RSRP threshold for S-SSB relaying determination criterion may be (pre-)configured and/or applied separately for RSRP measurement based on a single S-SSB (group) transmission and RSRP measurement based on multiple S-SSB (group) transmissions. For example, synchronization reference (re)selection and/or relaying determination may be determined based on RSRP measurement only based on a single S-SSB (group) transmission.

For example, when performing synchronization reference (re)selection or relaying determination based on each of S-SSB-RSRPs for multiple S-SSB transmissions in the frequency domain in the same slot, the UE may perform the synchronization reference (re)selection or the relaying determination based on a maximum value, an average value, or a minimum value of the multiple S-SSB-RSRPs.

For example, multiple S-SSB (group) transmissions in the same slot by the UE may be limited to M consecutive S-SSB occasions. For example, the M value may be predefined or (pre-)configured.

For example, when the UE performs multiple S-SSB (group) transmissions in the same slot, the form may be frequency-domain contiguous. In this case, when the UE transmits multiple S-SSBs (groups) for different RB sets, the UE may also transmit all or part of the S-SSBs (groups) for a guard band PRB between the different RB sets. For example, S-SSB (group) resources and coded symbols may be mapped per RB set, and S-SSBs (groups) with repeated and/or truncated (the high frequency domain and/or the low frequency domain) based on the number of PRBs may be mapped to the guard-band PRB between the RB sets. For example, a specific S-SSB (group) may be mapped across a guard-band PRB between RB sets and/or an RB set in the low frequency domain adjacent to the guard band and/or an RB set in the high frequency domain adjacent to the guard band.

For example, S-SSB (group) resources and coded symbols may be mapped to multiple RB sets within a SL BWP, and actual transmission may be performed for S-SSB (group) overlapping with a guard-band PRB between RB set(s) to be actually transmitted and/or S-SSB (group) within each RB set for RB set(s) to be actually transmitted. For example, a frequency domain gap between S-SSBs (groups) within the SL BWP may be constant and/or nearly constant.

For example, when the UE performs multiple S-SSB (group) transmissions in the same slot, the form may be frequency-domain contiguous, which may be extended to include at least (synchronization purpose or default) S-SSB (group). For example, when the UE performs multiple S-SSB (group) transmissions in the same slot, a target frequency domain may be determined based on a SL priority value and/or a CAPC value corresponding to a COT or SL transmission that is time-axis adjacent in the frequency domain. For example, the UE may preferentially consider additional S-SSB transmission in a frequency domain corresponding to a smaller priority value corresponding to a COT or SL transmission that is time-axis adjacent in the frequency domain.

In the embodiment(s) of the present disclosure, the slots in which multiple S-SSB (group) transmissions occurred may be based on slots in which PSBCH decoding was successful from the receiving UE's perspective, or based on slots in which an RSRP measurement value is greater than or equal to a certain level (e.g. (pre-)configured or determined by the UE).

In the embodiment(s) of the present disclosure, the slots in which multiple S-SSB transmissions occurred may be the number of S-SSB transmissions or S-SSB transmissions (within RB set(s)) predefined or (pre-)configured or promised at the transmitting/receiving UE.

For example, when calculating an L3-filtered value for the S-SSB-RSRP, additional S-SSB slot(s) may be excluded from the calculation. This is because there may be no actual S-SSB transmission in the additional S-SSB slot(s). For example, when calculating an L3-filtered value for the S-SSB-RSRP, additional S-SSB slot(s) may be determined to be excluded or included based on whether to detect S-SSB. For example, in the above case, if the UE succeeds in decoding S-SSB and/or if S-SSB-RSRP is greater than or equal to a certain level (e.g. a (pre-)configured threshold or predefined value), the UE may use/consider measurement values in the additional S-SSB slot(s) when calculating the L3-filtered value for the S-SSB-RSRP.

In the embodiment(s) of the present disclosure, the additional S-SSB slot(s) may be replaced by a (default as of Release 16/17) S-SSB slot to extend the ideas of the present disclosure.

In the embodiment(s) of the disclosure, the various methods may be applied differently depending on whether the frequency-domain S-SSB repetition is within an RB set or between multiple RB sets.

In the embodiment(s) of the present disclosure, the various methods may be applied differently depending on whether a total transmit power value for (multiple) S-SSB transmission(s) and/or a maximum transmit power value of the UE is over or under required power.

For example, the UE may calculate total power for S-SSB (group) repetition based on the number of PRBs for an allocated BW or a total occupied BW for the S-SSB (group) repetition. For example, the occupied BW may include a frequency gap domain between S-SSB repetitions in addition to the actual allocated BW for non-contiguous S-SSB repetition. For example, the allocated BW may indicate a domain to which S-SSB repetition is actually mapped.

For example, the UE may determine transmit power for a single or multiple S-SSBs (groups) based on a (pre-)configured resource when calculating the transmit power (regardless of whether there is actual transmission or not). For example, in the above case, the UE may calculate total transmit power assuming that actual transmission occurs for the entire (pre-)configured S-SSB (group), and/or the UE may allocate power to each S-SSB (group) or PSD derived based on the total transmit power. That is, in the above case, regardless of the number of S-SSBs (groups) actually transmitted, the (sub) power value of each S-SSB (group) may remain the same or similar.

For example, when the UE transmits a single or multiple S-SSBs (groups), information on the number of S-SSBs (groups) transmitted by the UE and/or information on the number of RB set(s) in which S-SSB (group) is transmitted and/or information on RB set(s) in which S-SSB (group) is transmitted and/or information on transmit power (e.g., whether power reduction occurs for each S-SSB (group) or total transmit power according to an upper limit value and/or power reduction level, etc.) may be indicated along with S-SSB transmission. For example, the indication through S-SSB may be indicated through contents of PSBCH, and/or may be indicated through S-PSS and/or S-SSS and/or PSBCH DMRS and/or PSBCH scrambling sequences. For example, the S-SSB (group) receiving UE may correct the S-SSB-RSRP value based on information on the number of S-SSB (group) transmissions and/or information on transmit power reduction and/or exclude them from the calculation of the L3-filtered value. For example, the UE may exclude the S-SSB (group) based RSRP measurement value from the calculation of the L3-filtered value when the UE determines that the power reduction has occurred for the S-SSB (group) transmission.

The embodiment(s) of the present disclosure may be applied differently in the form of the combination depending on transmission within or outside a channel occupancy time (COT). The embodiment(s) of the present disclosure may be applied differently in the form of the combination depending on the form of the COT (e.g., semi-static or time-varying). The embodiment(s) of the present disclosure may be applied differently in the form of the combination depending on a carrier, depending on whether there is a guard band between RB sets, or depending on regulations.

In the embodiment(s) of the present disclosure, the method of transmitting the synchronization signal and PSBCH may be applied differently depending on a SL operating region and regulations.

In the embodiment(s) of the present disclosure, the method of transmitting the synchronization signal and PSBCH may be applied differently depending on a size of a subcarrier spacing.

In the embodiment(s) of the present disclosure, the method of transmitting the synchronization signal and PSBCH may be different for each S-SSB time resource (e.g., sl-SSB-TimeAllocation1, sl-SSB-TimeAllocation2, sl-SSB-TimeAllocation3).

The embodiment(s) of the present disclosure may be different and/or (pre-)configured per resource pool and/or per transmission outside and/or within a resource pool and/or per QoS parameter and/or per CAPC and/or per SL priority and/or per transmission within or outside COT (when initializing the COT) and/or per transmission order within MCSt and/or per SL channel type and/or per RB set and/or per SL BWP and/or per SL carrier and/or per congestion control level and/or per transmission operation or reception operation and/or per transmit power level and/or per transmission start time and/or per channel access procedure type for transmission and/or per LBT failure ratio and/or per COT initiator UE or COT responded UE or other UE and/or per cast type and/or per SL HARQ- ACK feedback enabled or disabled and/or per HARQ-ACK feedback option and/or per number of transmission attempts for the same information or TB. In the embodiment(s) of the present disclosure, (pre-)configuration may be performed per resource pool and/or per transmission outside and/or within a resource pool and/or per QoS parameter and/or per CAPC and/or per SL priority and/or per transmission within or outside COT (when initializing the COT) and/or per transmission order within MCSt and/or per SL channel type and/or per RB set and/or per SL BWP and/or per SL carrier and/or per congestion control level and/or per transmission operation or reception operation and/or per transmit power level and/or per transmission start time and/or per channel access procedure type for transmission and/or per LBT failure ratio and/or per COT initiator UE or COT responded UE or other UE and/or per cast type and/or per SL HARQ- ACK feedback enabled or disabled and/or per HARQ-ACK feedback option and/or per number of transmission attempts for the same information or TB.

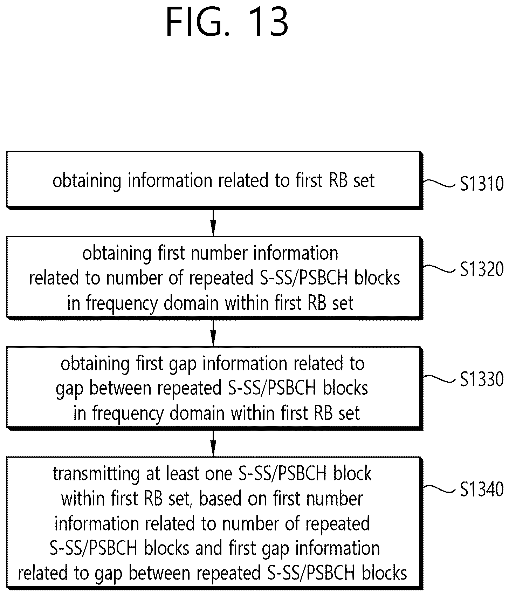

FIG. 13 shows a method for a first device to perform wireless communication, based on an embodiment of the present disclosure. The embodiment of FIG. 13 may be combined with various embodiments of the present disclosure.

Referring to FIG. 13, in step S1310, the first device may obtain information related to a first resource block (RB) set. In step S1320, the first device may obtain first number information related to a number of repeated sidelink-synchronization signal/physical sidelink broadcast channel (S-SS/PSBCH) blocks in a frequency domain within the first RB set. In step S1330, the first device may obtain first gap information related to a gap between the repeated S-SS/PSBCH blocks in the frequency domain within the first RB set. In step S1340, the first device may transmit at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Additionally, for example, the first device may obtain first frequency location information related to a start frequency location of a lowest S-SS/PSBCH block within the first RB set. For example, the first frequency location information related to the start frequency location of the lowest S-SS/PSBCH block may be configured for the first RB set. For example, at least one frequency location of the at least one S-SS/PSBCH block within the first RB set may be obtained based on the first frequency location information, the first number information, and the first gap information.

For example, transmit power may be equally allocated for the at least one S-SS/PSBCH block within the first RB set.

Additionally, for example, the first device may obtain information related to a second RB set. Additionally, for example, the first device may obtain second number information related to a number of repeated S-SS/PSBCH blocks in a frequency domain within the second RB set. Additionally, for example, the first device may obtain second gap information related to a gap between the repeated S-SS/PSBCH blocks in the frequency domain within the second RB set. For example, the second number information related to the number of repeated S-SS/PSBCH blocks and the second gap information related to the gap between the repeated S-SS/PSBCH blocks may be configured for the second RB set.

For example, the first number information and the first gap information for the first RB set may be configured independently of the second number information and the second gap information for the second RB set.

Additionally, for example, the first device may transmit at least one S-SS/PSBCH block within the second RB set, based on the second number information related to the number of repeated S-SS/PSBCH blocks and the second gap information related to the gap between the repeated S-SS/PSBCH blocks. Additionally, for example, the first device may obtain second frequency location information related to a start frequency location of a lowest S-SS/PSBCH block within the second RB set. For example, the second frequency location information related to the start frequency location of the lowest S-SS/PSBCH block may be configured for the second RB set. For example, at least one frequency location of the at least one S-SS/PSBCH block within the second RB set may be obtained based on the second frequency location information, the second number information, and the second gap information. For example, transmit power may be equally allocated for the at least one S-SS/PSBCH block within the second RB set.

For example, the first RB set may be an anchor RB set, and the second RB set may be a non-anchor RB set. In this case, for example, power may be allocated for transmission of the at least one S-SS/PSBCH block within the first RB set. In this case, for example, after allocating the power for the transmission of the at least one S-SS/PSBCH block within the first RB set, transmit power remaining from maximum transmit power may be equally allocated for transmission of at least one S-SS/PSBCH block within remaining RB sets other than the first RB set.

The proposed method can be applied to devices based on various embodiments of the present disclosure. First, the processor 102 of the first device 100 may obtain information related to a first resource block (RB) set. In addition, the processor 102 of the first device 100 may obtain first number information related to a number of repeated sidelink-synchronization signal/physical sidelink broadcast channel (S-SS/PSBCH) blocks in a frequency domain within the first RB set. In addition, the processor 102 of the first device 100 may obtain first gap information related to a gap between the repeated S-SS/PSBCH blocks in the frequency domain within the first RB set. In addition, the processor 102 of the first device 100 may control the transceiver 106 to transmit at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: obtaining information related to a first resource block (RB) set; obtaining first number information related to a number of repeated sidelink-synchronization signal/physical sidelink broadcast channel (S-SS/PSBCH) blocks in a frequency domain within the first RB set; obtaining first gap information related to a gap between the repeated S-SS/PSBCH blocks in the frequency domain within the first RB set; and transmitting at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: obtaining information related to a first resource block (RB) set; obtaining first number information related to a number of repeated sidelink-synchronization signal/physical sidelink broadcast channel (S-SS/PSBCH) blocks in a frequency domain within the first RB set; obtaining first gap information related to a gap between the repeated S-SS/PSBCH blocks in the frequency domain within the first RB set; and transmitting at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Based on an embodiment of the present disclosure, a non-transitory computer-readable storage medium storing instructions may be provided. For example, the instructions, when executed, may cause a first device to perform operations comprising: obtaining information related to a first resource block (RB) set; obtaining first number information related to a number of repeated sidelink-synchronization signal/physical sidelink broadcast channel (S-SS/PSBCH) blocks in a frequency domain within the first RB set; obtaining first gap information related to a gap between the repeated S-SS/PSBCH blocks in the frequency domain within the first RB set; and transmitting at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

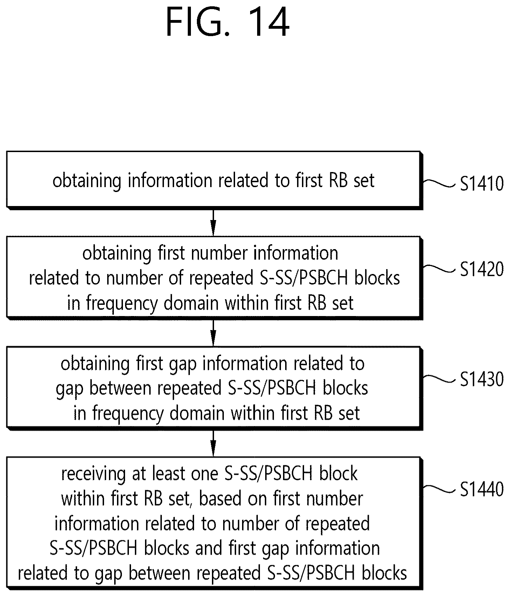

FIG. 14 shows a method for a second device to perform wireless communication, based on an embodiment of the present disclosure. The embodiment of FIG. 14 may be combined with various embodiments of the present disclosure.

Referring to FIG. 14, in step S1410, the second device may obtain information related to a first resource block (RB) set. In step S1420, the second device may obtain first number information related to a number of repeated sidelink-synchronization signal/physical sidelink broadcast channel (S-SS/PSBCH) blocks in a frequency domain within the first RB set. In step S1430, the second device may obtain first gap information related to a gap between the repeated S-SS/PSBCH blocks in the frequency domain within the first RB set. In step S1440, the second device may receive at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Additionally, for example, the second device may obtain first frequency location information related to a start frequency location of a lowest S-SS/PSBCH block within the first RB set. For example, the first frequency location information related to the start frequency location of the lowest S-SS/PSBCH block may be configured for the first RB set. For example, at least one frequency location of the at least one S-SS/PSBCH block within the first RB set may be obtained based on the first frequency location information, the first number information, and the first gap information.

For example, transmit power may be equally allocated for the at least one S-SS/PSBCH block within the first RB set.

Additionally, for example, the second device may obtain information related to a second RB set. Additionally, for example, the second device may obtain second number information related to a number of repeated S-SS/PSBCH blocks in a frequency domain within the second RB set. Additionally, for example, the second device may obtain second gap information related to a gap between the repeated S-SS/PSBCH blocks in the frequency domain within the second RB set. For example, the second number information related to the number of repeated S-SS/PSBCH blocks and the second gap information related to the gap between the repeated S-SS/PSBCH blocks may be configured for the second RB set.

For example, the first number information and the first gap information for the first RB set may be configured independently of the second number information and the second gap information for the second RB set.

Additionally, for example, the second device may receive at least one S-SS/PSBCH block within the second RB set, based on the second number information related to the number of repeated S-SS/PSBCH blocks and the second gap information related to the gap between the repeated S-SS/PSBCH blocks. Additionally, for example, the second device may obtain second frequency location information related to a start frequency location of a lowest S-SS/PSBCH block within the second RB set. For example, the second frequency location information related to the start frequency location of the lowest S-SS/PSBCH block may be configured for the second RB set. For example, at least one frequency location of the at least one S-SS/PSBCH block within the second RB set may be obtained based on the second frequency location information, the second number information, and the second gap information. For example, transmit power may be equally allocated for the at least one S-SS/PSBCH block within the second RB set.

For example, the first RB set may be an anchor RB set, and the second RB set may be a non-anchor RB set. In this case, for example, power may be allocated for transmission of the at least one S-SS/PSBCH block within the first RB set. In this case, for example, after allocating the power for the transmission of the at least one S-SS/PSBCH block within the first RB set, transmit power remaining from maximum transmit power may be equally allocated for transmission of at least one S-SS/PSBCH block within remaining RB sets other than the first RB set.

The proposed method can be applied to devices based on various embodiments of the present disclosure. First, the processor 202 of the second device 200 may obtain information related to a first resource block (RB) set. In addition, the processor 202 of the second device 200 may obtain first number information related to a number of repeated sidelink-synchronization signal/physical sidelink broadcast channel (S-SS/PSBCH) blocks in a frequency domain within the first RB set. In addition, the processor 202 of the second device 200 may obtain first gap information related to a gap between the repeated S-SS/PSBCH blocks in the frequency domain within the first RB set. In addition, the processor 202 of the second device 200 may control transceiver 206 to receive at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: obtaining information related to a first resource block (RB) set; obtaining first number information related to a number of repeated sidelink-synchronization signal/physical sidelink broadcast channel (S-SS/PSBCH) blocks in a frequency domain within the first RB set; obtaining first gap information related to a gap between the repeated S-SS/PSBCH blocks in the frequency domain within the first RB set; and receiving at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: obtaining information related to a first resource block (RB) set; obtaining first number information related to a number of repeated sidelink-synchronization signal/physical sidelink broadcast channel (S-SS/PSBCH) blocks in a frequency domain within the first RB set; obtaining first gap information related to a gap between the repeated S-SS/PSBCH blocks in the frequency domain within the first RB set; and receiving at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Based on an embodiment of the present disclosure, a non-transitory computer-readable storage medium storing instructions may be provided. For example, the instructions, when executed, may cause a second device to perform operations comprising: obtaining information related to a first resource block (RB) set; obtaining first number information related to a number of repeated sidelink-synchronization signal/physical sidelink broadcast channel (S-SS/PSBCH) blocks in a frequency domain within the first RB set; obtaining first gap information related to a gap between the repeated S-SS/PSBCH blocks in the frequency domain within the first RB set; and receiving at least one S-SS/PSBCH block within the first RB set, based on the first number information related to the number of repeated S-SS/PSBCH blocks and the first gap information related to the gap between the repeated S-SS/PSBCH blocks. For example, the first number information related to the number of repeated S-SS/PSBCH blocks and the first gap information related to the gap between the repeated S-SS/PSBCH blocks may be configured for the first RB set.

Based on various embodiments of the present disclosure, information regarding S-SSB repetition may be (pre-)configured for each RB set. Through this, OCB requirements can be efficiently achieved for each RB set. For example, as in the embodiment of FIG. 11 and/or FIG. 12, the information regarding the S-SSB repetition is (pre-)configured for each RB set, so that the OCB requirements can be efficiently achieved for each RB set. Furthermore, when transmitting S-SSB repeatedly, power can be preferentially allocated to the reference (default) S-SSB (repetition), and the remaining power can be allocated equally to other S-SSBs (repetitions). Through this, even during repeated S-SSB transmissions, the power of the reference (default) S-SSB is maintained so that S-SSB measurement-based operation can be performed efficiently.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

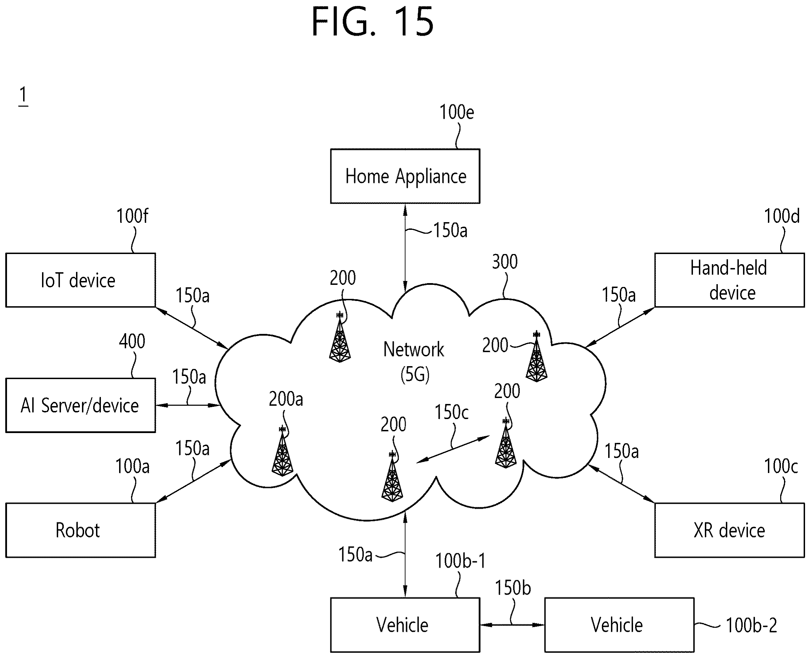

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to- Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

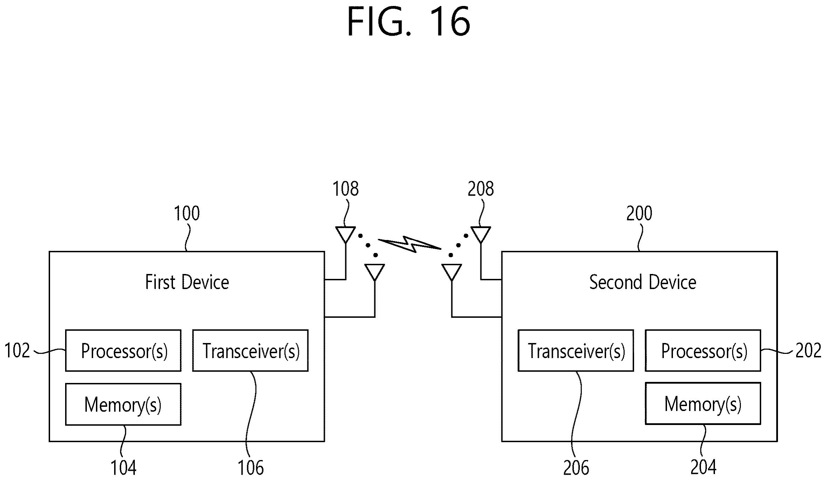

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

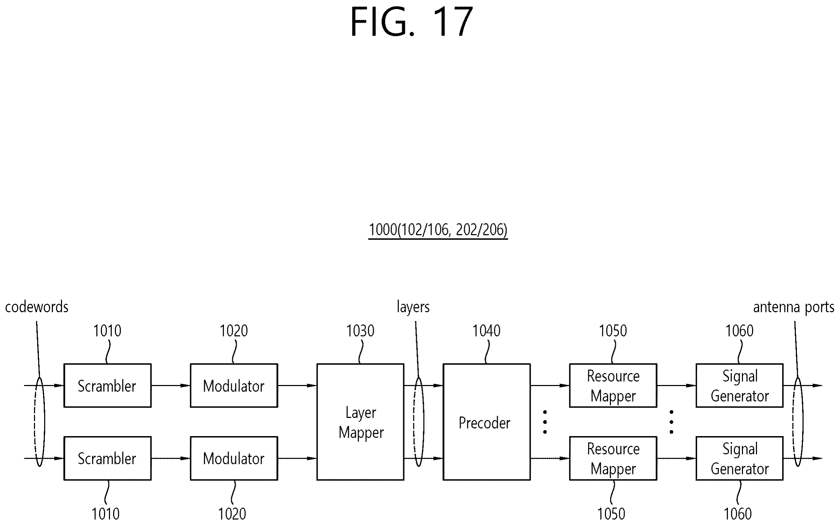

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

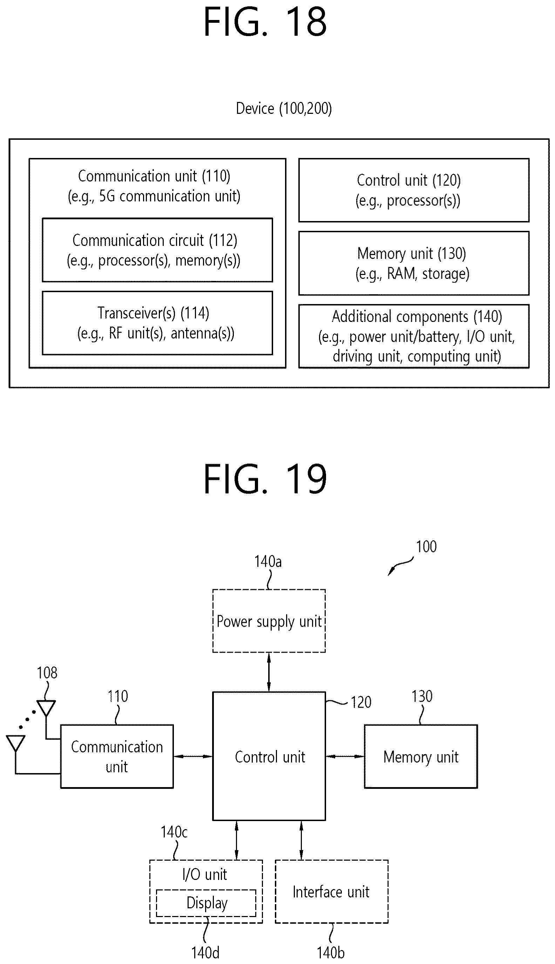

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

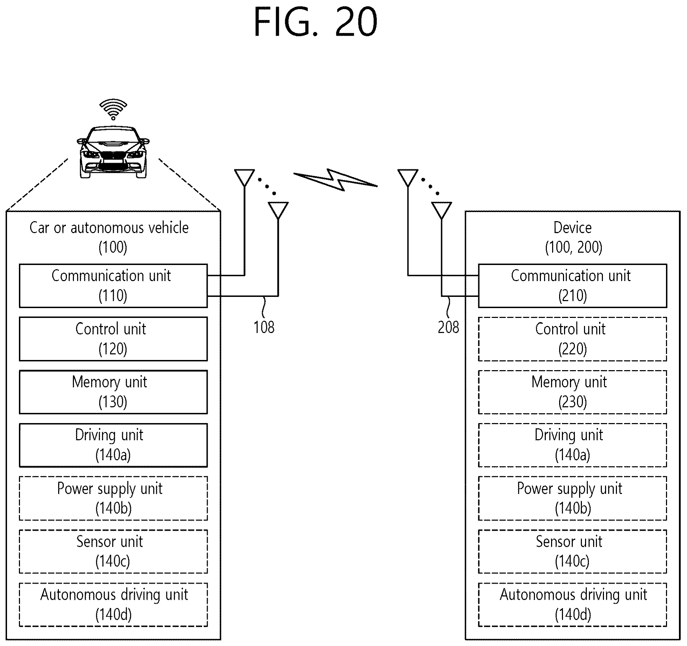

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
obtaining information related to a first resource block (RB) set;
obtaining first number information related to a number of repeated sidelink-synchronization signal/physical sidelink broadcast channel (S-SS/PSBCH) blocks in a frequency domain within the first RB set;
obtaining first gap information related to a gap between the repeated S-SS/PSBCH blocks in the frequency domain within the first RB set; and
transmitting at least one S-SS/PSBCH block within the first RB set, based on the first number information related to the number of repeated S-SS/PSBCH blocks and the first gap information related to the gap between the repeated S-SS/PSBCH blocks,
wherein the first number information related to the number of repeated S-SS/PSBCH blocks and the first gap information related to the gap between the repeated S-SS/PSBCH blocks are configured for the first RB set.

2. The method of claim 1, further comprising:
obtaining first frequency location information related to a start frequency location of a lowest S-SS/PSBCH block within the first RB set,
wherein the first frequency location information related to the start frequency location of the lowest S-SS/PSBCH block is configured for the first RB set.

3. The method of claim 2, wherein at least one frequency location of the at least one S-SS/PSBCH block within the first RB set is obtained based on the first frequency location information, the first number information, and the first gap information.

4. The method of claim 1, wherein transmit power is equally allocated for the at least one S-SS/PSBCH block within the first RB set.

5. The method of claim 1, further comprising:
obtaining information related to a second RB set;
obtaining second number information related to a number of repeated S-SS/PSBCH blocks in a frequency domain within the second RB set; and
obtaining second gap information related to a gap between the repeated S-SS/PSBCH blocks in the frequency domain within the second RB set,
wherein the second number information related to the number of repeated S-SS/PSBCH blocks and the second gap information related to the gap between the repeated S-SS/PSBCH blocks are configured for the second RB set.

6. The method of claim 5, wherein the first number information and the first gap information for the first RB set are configured independently of the second number information and the second gap information for the second RB set.

7. The method of claim 5, further comprising:
transmitting at least one S-SS/PSBCH block within the second RB set, based on the second number information related to the number of repeated S-SS/PSBCH blocks and the second gap information related to the gap between the repeated S-SS/PSBCH blocks.

8. The method of claim 7, further comprising:
obtaining second frequency location information related to a start frequency location of a lowest S-SS/PSBCH block within the second RB set,
wherein the second frequency location information related to the start frequency location of the lowest S-SS/PSBCH block is configured for the second RB set.

9. The method of claim 8, wherein at least one frequency location of the at least one S-SS/PSBCH block within the second RB set is obtained based on the second frequency location information, the second number information, and the second gap information.

10. The method of claim 7, wherein transmit power is equally allocated for the at least one S-SS/PSBCH block within the second RB set.

11. The method of claim 5, wherein the first RB set is an anchor RB set, and the second RB set is a non-anchor RB set.

12. The method of claim 11, wherein power is allocated for transmission of the at least one S-SS/PSBCH block within the first RB set.

13. The method of claim 12, wherein, after allocating the power for the transmission of the at least one S-SS/PSBCH block within the first RB set, transmit power remaining from maximum transmit power is equally allocated for transmission of at least one S-SS/PSBCH block within remaining RB sets other than the first RB set.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
obtaining information related to a first resource block (RB) set;
obtaining first number information related to a number of repeated sidelink-synchronization signal/physical sidelink broadcast channel (S-SS/PSBCH) blocks in a frequency domain within the first RB set;
obtaining first gap information related to a gap between the repeated S-SS/PSBCH blocks in the frequency domain within the first RB set; and
transmitting at least one S-SS/PSBCH block within the first RB set, based on the first number information related to the number of repeated S-SS/PSBCH blocks and the first gap information related to the gap between the repeated S-SS/PSBCH blocks,
wherein the first number information related to the number of repeated S-SS/PSBCH blocks and the first gap information related to the gap between the repeated S-SS/PSBCH blocks are configured for the first RB set.

15. A processing device adapted to control a first device, the processing device comprising:
at least one processor; and
at least one memory connected to the at least one processor and storing instructions that, based on being executed by the at least one processor, cause the first device to perform operations comprising:
obtaining information related to a first resource block (RB) set;
obtaining first number information related to a number of repeated sidelink-synchronization signal/physical sidelink broadcast channel (S-SS/PSBCH) blocks in a frequency domain within the first RB set;
obtaining first gap information related to a gap between the repeated S-SS/PSBCH blocks in the frequency domain within the first RB set; and
transmitting at least one S-SS/PSBCH block within the first RB set, based on the first number information related to the number of repeated S-SS/PSBCH blocks and the first gap information related to the gap between the repeated S-SS/PSBCH blocks,
wherein the first number information related to the number of repeated S-SS/PSBCH blocks and the first gap information related to the gap between the repeated S-SS/PSBCH blocks are configured for the first RB set.

16. A non-transitory computer-readable storage medium storing instructions that, when executed, cause a first device to perform operations comprising:
obtaining information related to a first resource block (RB) set;
obtaining first number information related to a number of repeated sidelink-synchronization signal/physical sidelink broadcast channel (S-SS/PSBCH) blocks in a frequency domain within the first RB set;
obtaining first gap information related to a gap between the repeated S-SS/PSBCH blocks in the frequency domain within the first RB set; and
transmitting at least one S-SS/PSBCH block within the first RB set, based on the first number information related to the number of repeated S-SS/PSBCH blocks and the first gap information related to the gap between the repeated S-SS/PSBCH blocks,
wherein the first number information related to the number of repeated S-SS/PSBCH blocks and the first gap information related to the gap between the repeated S-SS/PSBCH blocks are configured for the first RB set.

17. A method for performing wireless communication by a second device, the method comprising:
obtaining information related to a first resource block (RB) set;
obtaining first number information related to a number of repeated sidelink-synchronization signal/physical sidelink broadcast channel (S-SS/PSBCH) blocks in a frequency domain within the first RB set;
obtaining first gap information related to a gap between the repeated S-SS/PSBCH blocks in the frequency domain within the first RB set; and
receiving at least one S-SS/PSBCH block within the first RB set, based on the first number information related to the number of repeated S-SS/PSBCH blocks and the first gap information related to the gap between the repeated S-SS/PSBCH blocks,
wherein the first number information related to the number of repeated S-SS/PSBCH blocks and the first gap information related to the gap between the repeated S-SS/PSBCH blocks are configured for the first RB set.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
obtaining information related to a first resource block (RB) set;
obtaining first number information related to a number of repeated sidelink-synchronization signal/physical sidelink broadcast channel (S-SS/PSBCH) blocks in a frequency domain within the first RB set;
obtaining first gap information related to a gap between the repeated S-SS/PSBCH blocks in the frequency domain within the first RB set; and
receiving at least one S-SS/PSBCH block within the first RB set, based on the first number information related to the number of repeated S-SS/PSBCH blocks and the first gap information related to the gap between the repeated S-SS/PSBCH blocks,
wherein the first number information related to the number of repeated S-SS/PSBCH blocks and the first gap information related to the gap between the repeated S-SS/PSBCH blocks are configured for the first RB set.

19. A processing device adapted to control a second device, the processing device comprising:
at least one processor; and
at least one memory connected to the at least one processor and storing instructions that, based on being executed by the at least one processor, cause the second device to perform operations comprising:
obtaining information related to a first resource block (RB) set;
obtaining first number information related to a number of repeated sidelink-synchronization signal/physical sidelink broadcast channel (S-SS/PSBCH) blocks in a frequency domain within the first RB set;
obtaining first gap information related to a gap between the repeated S-SS/PSBCH blocks in the frequency domain within the first RB set; and
receiving at least one S-SS/PSBCH block within the first RB set, based on the first number information related to the number of repeated S-SS/PSBCH blocks and the first gap information related to the gap between the repeated S-SS/PSBCH blocks,
wherein the first number information related to the number of repeated S-SS/PSBCH blocks and the first gap information related to the gap between the repeated S-SS/PSBCH blocks are configured for the first RB set.

20. A non-transitory computer-readable storage medium storing instructions that, when executed, cause a second device to perform operations comprising:
obtaining information related to a first resource block (RB) set;
obtaining first number information related to a number of repeated sidelink-synchronization signal/physical sidelink broadcast channel (S-SS/PSBCH) blocks in a frequency domain within the first RB set;
obtaining first gap information related to a gap between the repeated S-SS/PSBCH blocks in the frequency domain within the first RB set; and
receiving at least one S-SS/PSBCH block within the first RB set, based on the first number information related to the number of repeated S-SS/PSBCH blocks and the first gap information related to the gap between the repeated S-SS/PSBCH blocks,
wherein the first number information related to the number of repeated S-SS/PSBCH blocks and the first gap information related to the gap between the repeated S-SS/PSBCH blocks are configured for the first RB set.
